# EUROPÄISCHE PATENTSCHRIFT

(11) **EP 1 949 039 B1**
(45) Veröffentlichungstag und Bekanntmachung des Hinweises auf die Patenterteilung: **12.09.2012**
(21) Anmeldenummer: 06828910.7
(22) Anmeldetag: 02.11.2006
(51) Int. Cl.: G01D 5/347

(54) **POSITIONSMESSSYSTEM**
POSITION MEASUREMENT SYSTEM
SYSTEME DE MESURE DE POSITION

(30) Priorität: 09.11.2005 DE 102005053789; 01.09.2006 DE 102006041357
(43) Veröffentlichungstag der Anmeldung: 30.07.2008
(73) Patentinhaber: Dr. Johannes Heidenhain GmbH, 83301 Traunreut (DE)
(72) Erfinder: MEISSNER, Markus, 83236 Übersee (DE); DRESCHER, Jörg, 83083 Riedering (DE)
(86) Internationale Anmeldenummer: PCT/EP2006/010525
(87) Internationale Veröffentlichungsnummer: WO 2007/054234

(56) Entgegenhaltungen:
- WO-A-02/33358
- WO-A-2005/088261
- DE-A1- 10 158 223
- US-B1- 6 494 616

## Beschreibung

Die vorliegende Erfindung betrifft ein Positionsmesssystem gemäß Anspruch 1.

In Halbleiterfertigungseinrichtungen ist es erforderlich die räumliche Position bestimmter beweglicher Objekte, wie beispielsweise Verfahrtische, präzise zu bestimmen. Hierzu werden üblicherweise Positionsmesssysteme verwendet, die ausgangsseitig Positionsinformationen zur Verfügung stellen. Über die ermittelten Positionsinformationen ist dann eine rechnergesteuerte Ablaufsteuerung in diesen Einrichtungen möglich. So muss z.B. in Wafersteppern die Lage von Maske und Wafer in allen 6 Freiheitsgraden (6DOF) sehr genau gemessen werden. Bisher erfolgte diese Positionsmessung vorwiegend über mehrere Laserinterferometer. Über die Laserinterferometer wird hierbei in bekannter Art und Weise die Relativposition beweglicher Komponenten bzgl. eines sog. Metrologie-Rahmens bestimmt. Zukünftig ist davon auszugehen, dass die Genauigkeitsanforderungen an die Positionsmessung bei gleichzeitig steigenden Verfahrgeschwindigkeiten der verschiedenen Teile weiter ansteigen. Während etwa bislang Genauigkeitsanforderungen von wenigen nm bei Geschwindigkeiten von ca. 1 m/s vorgegeben waren, ist zukünftig von erforderlichen Subnanometer-Genauigkeiten bei deutlich höheren Geschwindigkeiten auszugehen. Bei derartig hohen Genauigkeitsforderungen können jedoch keine Laserinterferometer als Positionsmesssysteme mehr verwendet werden, da die Brechungsindexschwankungen in der umgebenden Luft auch bei optimaler Luftkonditionierung zu inakzeptablen Messwertschwankungen in der Positionsmessung von einigen nm führen.

Aus diesem Grund wurden bereits alternative Positionsmesssysteme für derartige Einrichtungen vorgeschlagen. So ist etwa aus der EP 1 019 669 B1 bekannt, optische Positionsmesssysteme mit sog. Kreuzgittern als zweidimensionale (Gitter-) Maßverkörperung einzusetzen, d.h. gitterbasierte Positionsmesssysteme. Derartige Systeme werden kaum von eventuellen Brechungsindexschwankungen der Luft beeinflusst und erlauben daher gut reproduzierbare Positionsmessungen.

Um die Position der beweglichen Objekte, d.h. also etwa der Verfahrtische, in allen Freiheitsgraden zu bestimmen, sind hierfür simultan mehrere (mind. 1 Messwert pro Freiheitsgrad) voneinander unabhängige Messgrößen zu erfassen. Hierzu sind im Allgemeinen auf jedem Verfahrtisch mehrere Abtasteinheiten eines Positionsmesssystems an verschiedenen Positionen angebracht.

Eine einzelne Abtasteinheit kann dabei jeweils eine von den anderen Abtasteinheiten unabhängige Achse oder auch in Kombination mehrere Achsen messen. In dieser Konfiguration, in der die Maßverkörperung des Positionsmesssystems am unbewegten Teil der Maschine (Metrologie-Rahmen) befestigt ist, müssen die Abtasteinheiten auf den bewegten Verfahrtischen angebracht werden und die Messdaten der Abtasteinheiten über einen Kabelschlepp an eine stationäre Folgelektronik übertragen werden. Gleichzeitig ist es für die Dynamik der Maschine erforderlich, die bewegten Massen und die durch den Kabelschlepp bei Bewegung des Verfahrtisches eingebrachten dynamischen Kräfte möglichst gering zu halten. Insbesondere in hochdynamischen und gleichzeitig hochpräzisen Anwendungen ergeben sich hierbei sehr hohe Anforderungen an möglichst geringe Massen und möglichst geringes Bauvolumen. Gleichzeitig resultieren in diesen Applikationen aus der Anforderung an eine hochpräzise Messung der Position sehr große Anforderungen an eine verzerrungsfreie und störungsfreie Übertragung der positionsbezogenen Messdaten an eine vom Verfahrtisch häufig weit (bis >10m) entfernte Folgeelektronik. Über die Folgeelektronik werden die einzelnen Abtasteinheits-Daten zu einer Position des Verfahrtisches in allen Freiheitsgraden berechnet und einer Ablauf- und Bewegungssteuerung zur Verfügung gestellt.

Am oder in unmittelbarer Nähe des Verfahrtisches befinden sich die Motoren zum Antrieb des Verfahrtisches. Hierdurch entstehen starke elektromagnetische Felder, welche insbesondere analoge Messsignale, die auf langen elektrischen Leitungen übertragen werden, verfälschen können. Robuste, störfeste Leitungstreiber in den einzelnen Abtasteinheiten und ausreichend geschirmte Signalleitungen von jeder Abtasteinheit zur Folgeelektronik wiederum beeinflussen die Masse und das Bauvolumen von Abtasteinheit und Verfahrtisch nachteilig. Durch die am Verfahrtisch angebrachten Abtasteinheiten sind im Kabelschiepp zwischen Verfahrtisch und den stationären Komponenten zusätzliche Versorgungs- und Signalleitungen nötig, die die träge Masse und Steifigkeit dieses Kabelschlepps ebenfalls nachteilig beeinflussen.

Ebenfalls ist es erforderlich, die durch die Abtasteinheiten und die Signalübertragung am Verfahrtisch eingebrachte Verlustleistung möglichst gering zu halten, um eine Erwärmung des Verfahrtisches oder von Teilen dessen zu minimieren, da diese unmittelbar in einen Messfehler resultieren.

Auch im Fall der Verwendung gitterbasierter Positionsmesssysteme resultieren daher eine Reihe von Problemen, die gelöst werden müssen, um eine hinreichend genaue Positionsbestimmung sicherzustellen.

Aus der WO 02/33358 A1 ist ein rotatorisches Positionsmesssystem bekannt, bei dem eine rotierende Teilscheibe mit Hilfe mehrerer Abtasteinheiten zur Erzeugung von rotationswinkel-abhängigen Analogsignalen abgetastet wird. Die Analogsignale werden über Sample/Hold-Stufen einer Multiplexereinheit zugeführt, im Multiplexbetrieb analog-digital-gewandelt und anschließend in einer Prozessoreinheit in Positionswerte umgesetzt. Über einen nachgeordneten Kommunikationsbaustein werden die Positionswerte an eine Folgeelektronik zur Weiterverarbeitung übertragen.

Die DE 101 58 223 A1 offenbart ein Drehwinkel-Messgerät, das neben der Bestimmung der absoluten Winkelposition einer rotierenden Welle in einem Singleturn-Teil auch die Bestimmung der Anzahl erfolgter Wellenumdrehungen in einem Multiturn-Teil ermöglicht. Der Multiturn-Teil umfasst mehrere Abtasteinrichtungen, deren Ausgangssignale über eine Multiplexeinrichtung einer gemeinsamen Auswerteeinheit zugeführt werden.

Aufgabe der vorliegenden Erfindung ist es, ein Positionsmesssystem anzugeben, das eine Mehrzahl von Abtasteinheiten sowie mindestens eine gitterbasierte Maßverkörperung umfasst, wobei eine möglichst fehlerfreie Weiterverarbeitung der erzeugten Abtast- bzw. Positionssignale der Abtasteinheiten bei gleichzeitig geringem Aufwand sichergestellt ist.

Diese Aufgabe wird erfindungsgemäß durch ein Positionsmesssystem gemäß Anspruch 1 gelöst.

Vorteilhafte Ausführungen des erfindungsgemäßen Positionsmesssystems ergeben sich aus den Maßnahmen in den jeweils abhängigen Ansprüchen.

Erfindungsgemäß ist ein Positionsmesssystem zur Erfassung der Position eines in mehreren Freiheitsgraden beweglichen Objektes gegenüber einem stationären Objekt vorgesehen, bestehend aus
- mindestens einer Maßverkörperung, die mit einem der Objekte verbunden ist,
- mehreren Abtasteinheiten, die mit dem anderen Objekt verbunden sind und die aus der optischen Abtastung der Maßverkörperung Positions-Rohsignale erzeugen sowie
- einer Multiplexereinheit, wobei eine Zuführung der von den Abtasteinheiten erzeugten Positions-Rohsignale zur Multiplexereinheit erfolgt und von dieser eine Übertragung der Positions-Rohsignale der verschiedenen Abtasteinheiten im zeitlichen Multiplexbetrieb an eine nachgeordnete Folgeelektronik erfolgt, ohne die Positions-Rohsignale vorher in Positionswerte umzusetzen. Die Multiplexereinheit umfasst Digitalisierungsmittel, um die zugeführten Positions-Rohsignale in elektrisch übertragbare Digital-Rohsignale umzusetzen, die im zeitlichen Multiplexbetrieb an die Folgeelektronik übertragbar sind. Hierbei sind die von den Abtasteinheiten der Multiplexereinheit zugeführten Positions-Rohsignale optische Signale und eine Übertragung derselben erfolgt an die Multiplexereinheit über Lichtwellenleiter, wobei in der Multiplexereinheit Umsetzmittel angeordnet sind, um die optischen Signale in elektrische Signale umzusetzen, die dann den Digitalisierungsmitteln zuführbar sind.

Die Multiplexereinheit kann in einer bevorzugten Variante eine einzige Leitungstreiber-Einheit umfassen, die zur Übertragung der Positions-Rohsignale aller Abtasteinheiten an die Folgeelektronik nutzbar ist.

Des weiteren kann die Multiplexereinheit Korrekturmittel umfassen, um die an die Folgeelektronik zu übertragenden Positions-Rohsignale mit weiteren Sekundärinformationen zu ergänzen.

Die Korrekturmittel können hierbei zur Erzeugung und Aufbereitung mindestens einer Art der nachfolgenden Sekundärinformationen für die Übertragung an die Folgeelektronik geeignet sein:
- Fehler-Informationen
- Korrektur-Informationen
- Diagnose-Informationen
- Status-Informationen

Die Multiplexereinheit kann ferner ein oder mehrere weitere zentrale Funktionseinheiten enthalten, die von mehreren Abtasteinheiten gemeinsam nutzbar sind.

Hierbei kann die Multiplexereinheit mindestens eine der nachfolgenden zentralen Funktionseinheiten enthalten:
- Energieversorgungs-Funktionseinheit
- Abtastimpuls-Funktionseinheit
- Taktempfangs-Funktionseinheit

Ferner kann die Multiplexereinheit als zentrale Funktionseinheit eine Dekodiereinheit enthalten, die die Kodierung der an die Folgeelektronik zu übertragenden Informationen mit einem fehlerredundanten Datencode erlaubt. Ferner kann die Multiplexereinheit eine Multiplex-Stufe enthalten, die die parallel zugeführten Positions-Rohsignale der Abtasteinheiten zur Übertragung der Positions-Rohsignale der verschiedenen Abtasteinheiten im zeitlichen Multiplexbetrieb an eine nachgeordnete Folgeelektronik aufbereitet.

Weitere Vorteile sowie Einzelheiten der vorliegenden Erfindung ergeben sich aus der nachfolgenden Beschreibung mehrerer Ausführungsbeispiele anhand der beiliegenden Figuren.

Es zeigt
- Figur 1: eine schematisierte Darstellung der Architektur eines Gesamtsystems, bestehend aus mehreren Positionsmesssystemen und einer nachgeordneten Folgeelektronik;
- Figur 2: eine schematische Teildarstellung aus Figur 1 mit mehreren Abtasteinheiten sowie der Multiplexereinheit eines Positionsmesssystems aus Figur 1;
- Figur 3: eine stark schematisierte Darstellung einer Abtasteinheit in Verbindung mit der damit abgetasteten Maßverkörperung.

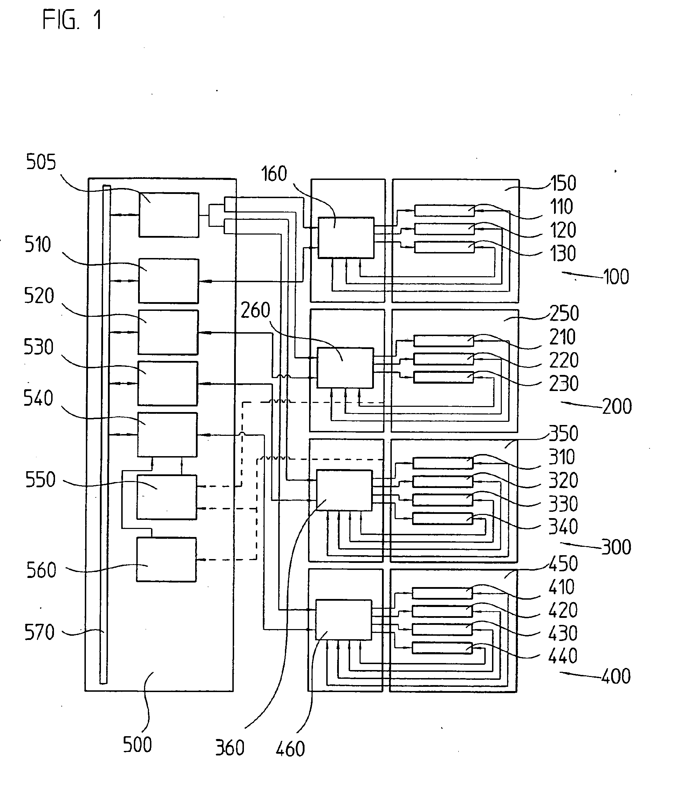

Figur 1 zeigt ein stark schematisiertes Blockschaltbild der Architektur eines Ausführungsbeispieles eines Gesamtsystems aus vier erfindungsgemäßen Positionsmesssystemen 100, 200, 300, 400 und einer Folgeelektronik 500 inclusive verschiedener funktionaler Komponenten 505, 510 - 540, 550, 560, 570. Der Folgeelektronik 500 werden die Signale der verschiedenen Positionsmesssysteme 100, 200, 300, 400 zur Weiterverarbeitung zugeführt. Von der Folgeelektronik 500 werden den verschiedenen Positionsmesssystemen 100, 200, 300, 400 zudem diverse Signale zu Synchronisationszwecken etc. zugeführt.

Auf Seiten der Positionsmesssysteme 100, 200, 300, 400 sind im vorliegenden Beispiel pro Positionsmesssystem 100, 200, 300, 400 jeweils mehrere Abtasteinheiten 110 - 130, 210 - 230, 310 - 340, 410 - 440 vorgesehen. Die Mehrzahl der Abtasteinheiten 110 - 130, 210 - 230, 310 - 340, 410 - 440 eines Positionsmesssystems 100, 200, 300, 400 ist jeweils einem beweglichen Objekt 150, 250, 350, 450 an einer Maschine zugeordnet, beispielsweise einem Verfahrtisch. Die verschiedenen Abtasteinheiten 110 - 130, 210 - 230, 310 - 340, 410 - 440 eines Positionsmesssystems 100, 200, 300, 400 liefern eine Gesamtheit von Positionssignalen, die es auswerteseitig ermöglichen für das jeweilige bewegliche Objekt 150, 250, 350, 450 dessen räumliche Position in sechs Freiheitsgraden hochpräzise zu bestimmen. Zu diesem Zweck kann je nach Anforderung eine unterschiedliche Anzahl von Abtasteinheiten 110 - 130, 210 - 230, 310 - 340, 410 - 440 jedem Positionsmesssystem 100, 200, 300, 400 zugeordnet sein. Im dargestellten Beispiel sind insgesamt vier Verfahrtische als bewegliche Objekte 150, 250, 350, 450 einer Maschine vorgesehen, wobei die zugehörigen Positionsmesssysteme 100, 200, 300, 400 drei oder vier Abtasteinheiten 110 - 130, 210 - 230, 310 - 340, 410 - 440 umfassen.

Die von den verschiedenen Positionsmesseinrichtungen 100, 200, 300, 400 erzeugten Positions-Rohsignale werden auf Seiten der Folgeelektronik 500 jeweils einer Interpolations-Elektronik 510, 520, 530, 540 zugeführt. Unter dem Begriff Positions-Rohsignale seien nachfolgend Signale verstanden, die eine Positionsinformation enthalten, auch wenn diese ggf. noch durch entsprechende Operationen in einen konkreten Positionswert umzusetzen ist. Beispielsweise können derartige Positions-Rohsignale Phasenwerte sein, die aus der Abtastung der Maßverkörperung mittels der Abtasteinheiten 110 - 130, 210 - 230, 310 - 340, 410 - 440 unmittelbar resultieren. Die eigentlichen Positionswerte ergeben sich aus den Phasenwerten dann beispielsweise durch die Verrechnung mit verschiedenen Korrekturwerten wie etwa Signalamplituden, Signalwinkeln und weiteren Größen, die z.T. aus den Messwerten der anderen Abtasteinheiten 110 - 130, 210 - 230, 310 - 340, 410 - 440 gewonnen werden.

Die jedem Positionsmesssystem 100, 200, 300, 400 zugeordnete Interpolationselektronik 510, 520, 530, 540 auf Seiten der Folgeelektronik 500 berechnet aus den Positions-Rohsignalen auf bekannte Art und Weise die Position der einzelnen Abtasteinheiten 110 - 130, 210 - 230, 310 - 340, 410 - 440. Hierfür kommen prinzipiell bekannte, aber rechenintensive Interpolations- und Signalkorrekturalgorithmen zur Anwendung. Die für diese Algorithmen erforderliche Rechenleistung ist auch die Ursache dafür, dass die Umsetzung der erzeugten Positions-Rohsignale in Positionswerte nicht bereits in den Abtasteinheiten 110 - 130, 210 - 230, 310 - 340, 410 - 440 bzw. in den Positionsmesssystemen 100, 200, 300, 400 durchgeführt wird, sondern die Positions-Rohsignale erfindungsgemäß pro Positionsmesssystem 100, 200, 300, 400 im zeitlichen Multiplexbetrieb zur Folgeelektronik 500 übertragen werden. Die Ausgangssignale der verschiedenen Interpolations-Elektroniken 510, 520, 530, 540 wiederum werden über einen geeigneten Datenbus 570 schließlich einer - nicht dargestellten - übergeordneten Steuereinheit der Maschine zur Weiterverarbeitung zugeführt. Die Steuereinheit steuert auf Basis der Positionsinformationen letztlich die Maschine bzw. die erforderlichen Bewegungsabläufe der beweglichen Objekte 150, 250, 350, 450 an der Maschine.

Pro Positionsmesssystem 100, 200, 300, 400 ist vorzugsweise eine gemeinsam genutzte Lichtquelle vorgesehen, über die im gepulsten Betrieb eine zeitlich-synchrone Positionsbestimmung aller Abtasteinheiten 110 - 130, 210 - 230, 310 - 340, 410 - 440 eines Positionsmesssystems 100, 200, 300, 400 möglich ist. Im Zusammenhang mit dem gepulsten Betrieb der Lichtquelle sei ausdrücklich auf den Inhalt der EP 1 334 332 B1 der Anmelderin verwiesen.

Auf Seiten der Folgeelektronik 500 sind ferner übergeordnete Synchronisationsmittel 505 vorgesehen, über die eine Synchronisation der Lichtquellen verschiedener Positionsmesssysteme 100, 200, 300, 400 erfolgt. Zu den hierzu erforderlichen Synchronisationsmitteln 505 gehört etwa eine Takterzeugungseinheit, über die z.B. ein optischer Synchronisations-Taktimpuls erzeugbar ist, der wiederum über geeignete Lichtwellenleiter an die Lichtquellen der verschiedenen Positionsmesssysteme übertragbar ist. Alternativ hierzu könnte auch ein elektrischer Synchronisations-Taktimpuls über geeignete laufzeitstabile Signalleitungen übertragen werden.

Des weiteren sind auf Seiten der Folgeelektronik 500 in einer vorteilhaften Ausführungsform Korrekturmittel, die grundsätzlich dazu dienen, die an die Folgeelektronik 500 übertragenen Positions-Rohsignale bzgl. Signalfehlern in bekannter Art und Weise zu korrigieren etc.. Beispielsweise kann es sich hierbei um Korrekturmittel 550 zur Differenzzeitmessung sowie Korrekturmittel 560 zur Wellenlängenmessung handeln.

Als Korrekturwert des Korrekturmittels 550 zur Differenzzeitmessung kann z.B. im einfachsten Fall die Differenzzeit(en) zwischen 2 (oder mehreren) zu synchronisierenden Lichtquellen vorgesehen sein. Aus diesem(n) kann auf bekannte Weise in der jeweiligen Interpolationselektronik 510, 520, 530, 540 mit der bekannten Verfahrgeschwindigkeit eine um diese Differenzzeit(en) korrigierte Position ermittelt werden.

Als Korrekturwert des Korrekturmittels 560 zur Wellenlängenmessung kann z.B. im einfachsten Fall die aktuelle Wellenlänge zum Messzeitpunkt oder eine von dieser in bekannter Weise abhängende Position oder eine sonstige Messgröße übergeben werden. Mit der bekannten Abhängigkeit der gemessenen Position von der gemessenen Wellenlänge kann diese Position ebenfalls auf einfache Weise um eine eventuelle Wellenlängenänderung korrigiert werden.

Die von den Abtasteinheiten 110 - 130, 210 - 230, 310 - 340, 410 - 440 eines Positionsmesssystems 100, 200, 300, 400 aus der optischen Abtastung einer Maßverkörperung erzeugten Positions-Rohsignale werden erfindungsgemäß jeweils einer Multiplexereinheit 160, 260, 360, 460 zugeführt. Von dieser erfolgt eine Übertragung der Positions-Rohsignale im zeitlichen Multiplexbetrieb an die nachgeordnete Folgeelektronik 500 bzw. die jeweils zugeordneten Interpolations-Elektroniken 510, 520, 530, 540 auf Seiten der Folgeelektronik 500. Die Kommunikation zwischen den Multiplexereinheiten 160, 260, 360, 460 und der Folgeelektronik 500 erfolgt gemäß dem vorliegenden Ausführungsbeispiel vorzugsweise in digitaler bzw. serieller Form über geeignete Signalübertragungsleitungen, d.h. es werden jeweils elektrisch übertragbare Digitalsignale im zeitlichen Multiplexbetrieb an die Folgeelektronik 500 übertragen. Als mögliche digitale Schnittstellen für die Übertragung der digitalisierten Positions-Rohsignale der Positionsmesssysteme kommen etwa bekannte Verfahren und Protokolle wie LVDS (ANSI 644-A-2001) oder FPDP (ANSI 17.1-2003) in Betracht.

Auf Seiten der Positionsmesssysteme 100, 200, 300, 400 erfolgt demnach vorzugsweise zumindest eine Digitalisierung der erzeugten Positions-Rohsignale, um diese dann wie erläutert über die Multiplexereinheiten 160, 260, 360, 460 und eine serielle Schnittstelle an die Folgeelektronik 500 zu übertragen. Vor der Übertragung der Positions-Rohsignale an die Folgeelektronik 500 ist eine Umsetzung dieser Signale in Positionswerte demzufolge nicht erforderlich. Auf diese Art und Weise kann sichergestellt werden, dass die komplette, digitalisierte Rohinformation an die Folgeelektronik 500 zur Weiterverarbeitung übergeben wird, ohne dass auf Seiten der Positionsmesssysteme 100, 200, 300, 400 komplexe und aufwändige Rechenoperationen etc. nötig wären, die dort einen entsprechenden schaltungstechnischen Aufwand verursachen würden.

Im Fall der vorgesehenen Digitalisierung der Positions-Rohsignale erst in den Multiplexereinheiten 160, 260, 360, 460 kann die Übertragung der Positions-Rohsignale von den Abtasteinheiten 110 - 130, 210 - 230, 310 - 340, 410 - 440 zu den Multiplexereinheiten 160, 260, 360, 460 in Form der Übertragung optischer Signale über Lichtwellenleiter erfolgen, wie dies im dargestellten Ausführungsbeispiel der Fall ist. Wenn zudem die Zuführung des zur optischen Abtastung genutzten Lichtimpulses über einen weiteren Lichtwellenleiter erfolgt, können die Abtasteinheiten 110 - 130, 210 - 230, 310 - 340, 410 - 440 rein passiv ausgebildet werden.

In einer ersten alternativen Ausführungsform hierzu kann die Umsetzung der bei der optischen Abtastung gewonnenen Positions-Rohsignale in elektrische Signale bereits in den Abtasteinheiten erfolgen, so dass dann den Multiplexereinheiten Positions-Rohsignale in Form analoger elektrischer Signale zugeführt werden. Die Übertragung dieser Signale erfolgt dann über geeignete elektrische Signalleitungen.

In einer zweiten alternativen Ausführungsform kann auch eine Digitalisierung der Positions-Rohsignale auf Seiten der Positionsmesssysteme über geeignete Digitalisierungsmittel bereits in den Abtasteinheiten erfolgen. In diesem Fall ist eine serielle Signalübertragung von den Abtasteinheiten zu den Multiplexereinheiten über eine geeignete Schnittstellenarchitektur möglich; über diese Schnittstelle kann dann grds. auch die Stromversorgung der Abtasteinheiten erfolgen.

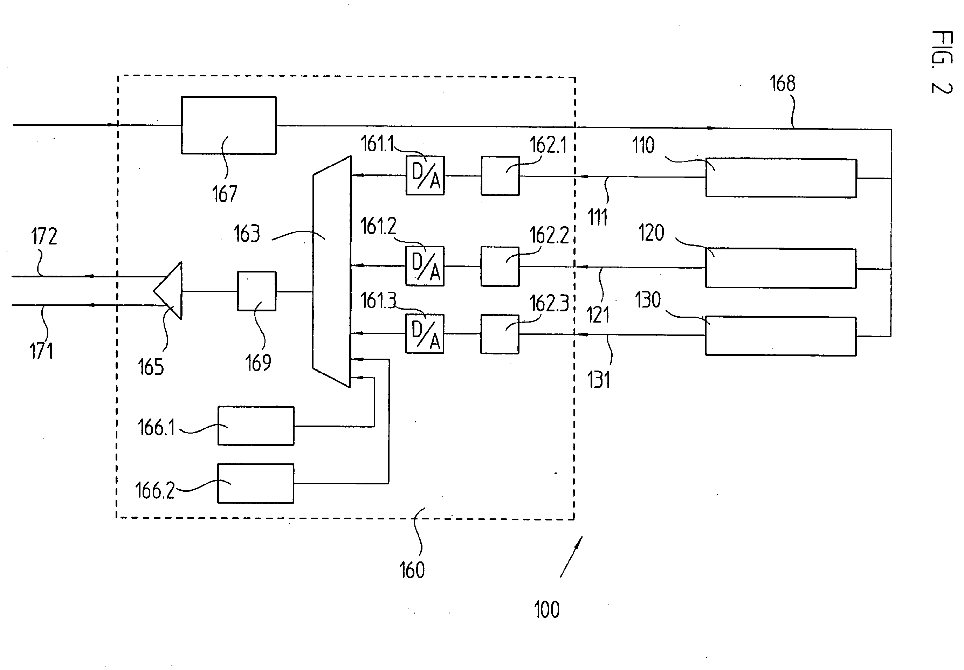

Ein einzelnes Positionsmesssystem 100 des Gesamtsystems aus Figur 1 wird nunmehr inclusive nachgeordneter Multiplexereinheit 160 anhand von Figur 2 detailliert beschrieben.

Die von den drei Abtasteinheiten 110, 120, 130 des Positionsmesssystems 100 erzeugten Positions-Rohsignale werden hierbei als optische Signale über Lichtwellenleiter 111, 121, 131 in Richtung der Multiplexereinheit 160 übertragen. Dort erfolgt über die Umsetzmittel 162.1, 162.2, 162.3 zunächst eine Umsetzung der optischen Positions-Rohsignale in elektrische Positions-Rohsignale. Diese werden anschließend Digitalisierungsmitteln 161.1, 161.2, 161.3 zugeführt, die aus den elektrischen analogen Positions-Rohsignalen digitale Positions-Rohsignale erzeugen. Die derart aufbereiteten digitalen Positions-Rohsignale der verschiedenen Abtasteinheiten 110, 120, 130 werden daraufhin parallel einer Multiplex-Stufe 163 zugeführt, die Positions-Rohsignale der verschiedenen Abtasteinheiten 110, 120, 130 zur Übertragung über einen geeigneten Leitungstreiber 165 an die nachgeordnete - in Figur 2 nicht dargestellte - Folgeelektronik im zeitlichen Multiplex-betrieb aufbereitet.

Es werden demzufolge erfindungsgemäß die digitalen Ausgangssignale aller Abtasteinheiten 110, 120, 130 eines Verfahrschlittens der gemeinsamen

Multiplexereinheit 160 zugeführt, die diese bündelt und im zeitlichen Multiplex-Betrieb an die Folgeelektronik weiterleitet. Aufgrund dieser Maßnahmen lässt sich eine aufwändige Treiberelektronik für jede einzelne Abtasteinheit 110, 120, 130 der Positionsmesseinrichtung 100 vermeiden.

Die Multiplexereinheit 160 besitzt einen von allen Abtasteinheiten 110, 120, 130 eines Verfahrtisches gemeinsam genutzten Leitungstreiber 165 für die üblicherweise große Entfernung zwischen beweglichem Objekt bzw. Verfahrtisch und der Folgeelektronik. Es ist demzufolge nur nötig, den einzigen Leitungstreiber 165 pro Positionsmesssystem 100 auf diese relativ lange Übertragungsstrecke bzw. die entsprechenden Signalleitungen 171, 172 auszulegen.

Aufgrund des vorgesehenen Multiplex-Betriebs lässt sich ferner die Zahl der Verbindungsleitungen zwischen dem Verfahrtisch und der Folgeelektronik deutlich reduzieren. Es resultiert eine vorteilhafte geringere Steifigkeit des Kabelschlepps am Verfahrtisch aufgrund der derart möglichen Einsparung von Leitungen.

Die Multiplexereinheit 160 umfasst im dargestellten Beispiel ferner verschiedene - lediglich schematisch angedeutete - Korrekturmittel 166.1, 166.2. Diese ermöglichen es, die an die Folgeelektronik im Multiplex-Betrieb zu übertragenden Positions-Rohsignale mit weiteren Sekundärinformationen zu ergänzen. So können die Korrekturmittel 166.1, 166.2 etwa zur Erzeugung und Aufbereitung von Signalfehler-Informationen (z.B. Offsetspannungen), Signalkorrektur-Informationen (z.B. Temperatur, Spannungsschwankungen, Informationen über Zeitpunkt, Dauer, Amplitude des Abtastpulses), Signaldiagnose-Informationen (z.B. Signalgültigkeit, Signalfehler), Status-Informationen (z.B. Betriebszustand, Gültigkeit der Versorgungsspannungen, Fehlerzustand) etc. als Sekundärinformationen dienen, die an die Folgeelektronik 500 übertragen werden. Durch die zusätzliche Übertragung derartiger Sekundärinformationen stehen der Interpolationselektronik 510 zusätzliche Größen zur Verfügung, durch deren Verrechnung die Genauigkeit der berechneten Position weiter gesteigert werden kann. Derartige Sekundärinfor mationen stellen sowohl der Interpolationselektronik 510 als auch der Folgeelektronik 500 Informationen zur Verfügung, mit denen der Betriebszustand des Positionsmesssystems 100 detailliert analysiert werden kann und mit denen im Fehlerfall eine Eingrenzung der Fehlerursache möglich ist.

Zwischen der Multiplex-Stufe 163 und dem Leitungstreiber 165 ist im vorliegenden Beispiel eine Signalkodiereinheit 169 als eine zentrale Funktionseinheit angeordnet. Diese erlaubt eine Kodierung der zu übertragenden Informationen mit einem fehlerredundanten Datencode. Derart können auf Seiten der Interpolationselektronik 510 Datenübertragungsfehler erkannt werden (z.B. bei Verwendung eines Parity-Bits) und/oder korrigiert werden (z.B. bei Verwendung von Hamming-Codes). Vorteilhaft ist wiederum, dass eine derartige Signalkodiereinheit 169 als zentrale Funktionseinheit aufgrund der erfindungsgemäßen Systemarchitektur für die Mehrzahl von Abtasteinheiten 110, 120, 130 nur einmal erforderlich ist.

Mit dem Bezugszeichen 167 wird in Figur 2 schließlich ebenfalls nur schematisch eine weitere zentrale Funktionseinheit angedeutet, die von der Mehrzahl von Abtasteinheiten 110, 120, 130 dieses Positionsmesssystems 100 gemeinsam genutzt wird.

Als weitere zentrale Funktionseinheit 167, die von mehreren Abtasteinheiten 110, 120, 130 nutzbar ist, kann etwa eine Energieversorgungs-Funktionseinheit in der Multiplexereinheit 160 vorgesehen werden, die die Energieversorgung der Abtasteinheiten 110, 120, 130 übernimmt, beispielsweise durch eine zentrale Versorgungsspannungsstabilisierung und Filterung derselben oder durch die Erzeugung einer gemeinsamen Abtastbeleuchtung etc..

Als weitere zentrale Funktionseinheit 167 kann auch eine Abtastimpuls-Funktionseinheit und/oder eine Taktempfangs-Funktionseinheit in der Multiplexereinheit 160 angeordnet werden. Über die Abtastimpuls-Funktionseinheit kann beispielsweise ein optischer Abtastimpuls bereitgestellt werden, der allen Abtasteinheiten 110, 120, 130 des Positionsmesssystems 100 zugeführt wird, um eine gepulste Positionsbestimmung vorzunehmen. Die Taktempfangs-Funktionseinheit kann hierbei dazu dienen, den von einer Takterzeugungseinheit in der Folgeelektronik zentral erzeugten Taktimpuls zu registrieren und daraus zentral einen gemeinsamen optischen Abtastimpuls für die Abtasteinheiten 110, 120, 130 des jeweiligen Positionsmesssystems 100 zu erzeugen. Besonderer Vorteil einer derartigen zentralen Erzeugung des Abtastimpulses ist hierbei, dass hierdurch Zeitverschiebungen zwischen den Abtastzeitpunkten der einzelnen Abtasteinheiten 110, 120, 130 durch einzelne Abtastimpulse ausgeschlossen sind.

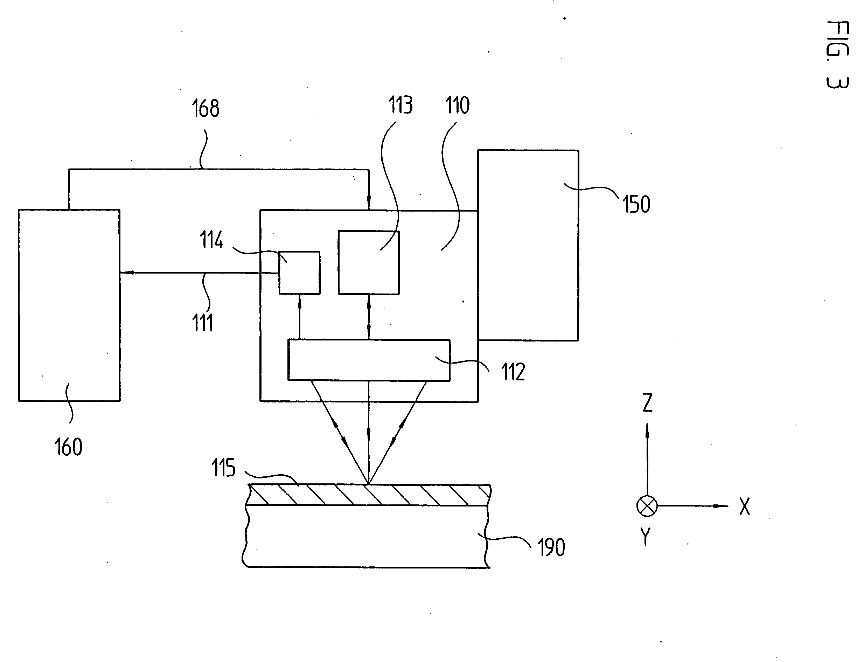

In Figur 3 ist schließlich eine Abtasteinheit 110 eines Positionsmesssystems aus den vorhergehenden Figuren in Verbindung mit der damit abgetasteten Maßverkörperung 115 dargestellt.

Die Abtasteinheit 110 und die Maßverkörperung 115 sind mit den schematisiert angedeuteten Objekten 150 bzw. 190 verbunden, die z.B. die zwei zueinander bewegbaren Maschinenteile darstellen, deren Position zueinander in mehreren Freiheitsgraden zu erfassen ist. Beim Objekt 150 kann es sich etwa um den bereits erwähnten Verfahrtisch handeln, beim Objekt 190 um den erwähnten Metrologie-Rahmen der Maschine. Die beiden Objekte 150, 190 sind in mindestens einer Messrichtung x zueinander beweglich angeordnet, neben der Bewegung in Messrichtung x kann ferner eine Relativbewegung in der Messebene hierzu senkrechten Messrichtung y möglich sein sowie in der darauf senkrecht orientierten Richtung z. Üblicherweise sind Relativbewegungen der beiden Objekte 150, 160 zueinander in allen sechs Freiheitsgraden möglich.

Die mit dem stationären Objekt 190 verbundene Maßverkörperung 115 ist in bekannter Art und Weise als ein- oder zweidimensionales Auflicht-Gitter bzw. Kreuzgitter ausgebildet und besteht in aus einer Vielzahl periodisch in x- und ggf. y-Richtung angeordneten Teilbereichen unterschiedlicher Reflektivität.

Die Abtasteinheit 110 ist im vorliegenden Beispiel mit dem beweglichen Objekt 150 verbunden. Lediglich schematisiert ist in der Figur die Abtastoptik 112 angedeutet, die verschiedene optische Bauteile wie Linsen, Prismen etc. umfassen kann; ebenfalls nur schematisch angedeutet sind die Abtaststrahlengänge zur Erzeugung der Positions-Rohsignale. Zur Erzeugung der hochauflösenden Positionssignale ist vorzugsweise ein interferentielles optisches Abtastprinzip vorgesehen.

In der Abtasteinheit 110 gelangt der über den Lichtwellenleiter 168 von der Multiplexereinheit 160 kommende Lichtpuls der Lichtquelle an eine schematisch angedeutete Auskoppeloptik 113, über die ein oder mehrere Abtaststrahlengänge in Richtung der Abtastoptik 112 ausgekoppelt werden. Detektionsseitig ist eine Einkopplung der Abtaststrahlengänge in eine geeignete Einkoppeloptik 114 vorgesehen und die anschließende Übermittlung der optischen Positions-Rohsignale über den Lichtwellenleiter 111 in Richtung der Multiplexereinheit 160. Wie bereits oben angedeutet ist die vorliegende Abtasteinheit 110 rein passiv ausgebildet, d.h. sowohl die Lichtquelle für die Abtastung als auch die zur Signalerfassung nötigen Detektorelemente sind extern von der Abtasteinheit 110 angeordnet; die Zuführung des Lichtimpulses von der Lichtquelle wie auch die Zuführung des zu erfassenden Strahlenbündels zu geeigneten Detektorelementen erfolgt über Lichtwellenleiter 168, 111.

Vorzugsweise sind abtastseitig zwei Abtaststrahlengänge pro Abtasteinheit 110 vorgesehen, die eine gleichzeitige Positionserfassung sowohl in Messrichtung x als auch in der senkrecht hierzu orientierten Richtung z ermöglichen. Entsprechende interferentielle optische Abtastprinzipien sind z.B. in der Patentanmeldung DE 10 2005 043 569.6 der Anmelderin detailliert beschrieben.

## Patentansprüche

1. Positionsmesssystem zur Erfassung der Position eines in mehreren Freiheitsgraden beweglichen Objektes (150; 250; 350; 450) gegenüber einem stationären Objekt (190), bestehend aus
- mindestens einer Maßverkörperung (115), die mit einem der Objekte (190) verbunden ist,
- mehreren Abtasteinheiten (110-130; 210-230; 310-340; 410-440), die mit dem anderen Objekt (150; 250; 350; 450) verbunden sind und die aus der optischen Abtastung der Maßverkörperung (115) Positions-Rohsignale erzeugen, sowie
- einer Multiplexereinheit (160; 260; 360; 460), wobei eine Zuführung der von den Abtasteinheiten (110-130; 210-230; 310-340; 410-440) erzeugten Positions-Rohsignale zur Multiplexereinheit (160; 260; 360; 460) erfolgt und von dieser eine Übertragung der Positions-Rohsignale der verschiedenen Abtasteinheiten (110-130; 210-230; 310-340; 410-440) im zeitlichen Multiplexbetrieb an eine nachgeordnete Folgeelektronik (500) erfolgt, ohne die Positions-Rohsignale vorher in Positionswerte umzusetzen und wobei
- die Multiplexereinheit (160) Digitalisierungsmittel (161.1, 161.2, 161.3) umfasst, um die zugeführten Positions-Rohsignale in elektrisch übertragbare Digital-Rohsignale umzusetzen, die im zeitlichen Multiplexbetrieb an die Folgeelektronik übertragbar sind und
- die von den Abtasteinheiten (110-130) der Multiplexereinheit (160) zugeführten Positions-Rohsignale optische Signale sind und eine Übertragung derselben an die Multiplexereinheit (160) über Lichtwellenleiter (111; 121; 131) erfolgt und in der Multiplexereinheit (160) Umsetzmittel (162.1, 162.2, 162.3) angeordnet sind, um die optischen Signale in elektrische Signale umzusetzen, die dann den Digitalisierungsmitteln (161.1, 161.2, 161.3) zuführbar sind.

2. Positionsmesssystem nach Anspruch 1, wobei die Multiplexereinheit (160; 260; 360; 460) eine einzige Leitungstreiber-Einheit (165) umfasst, die zur Übertragung der Positions-Rohsignale aller Abtasteinheiten (110-130; 210-230; 310-340; 410-440) an die Folgeelektronik (200) nutzbar ist.

3. Positionsmesssystem nach Anspruch 1, wobei die Multiplexereinheit (160) Korrekturmittel (166.1, 166.2) umfasst, um die an die Folgeelektronik zu übertragenden Positions-Rohsignale mit weiteren Sekundärinformationen zu ergänzen.

4. Positionsmesssystem nach Anspruch 3, wobei die Korrekturmittel (166.1, 166.2) zur Erzeugung und Aufbereitung mindestens einer Art der nachfolgenden Sekundärinformationen für die Übertragung an die Folgeelektronik geeignet sind:
- Fehler-Informationen
- Korrektur-Informationen
- Diagnose-Informationen
- Status-Informationen

5. Positionsmesssystem nach Anspruch 1, wobei die Multiplexereinheit (160) ein oder mehrere weitere zentrale Funktionseinheiten (167, 169) enthält, die von mehreren Abtasteinheiten (110-130) gemeinsam nutzbar sind.

6. Positionsmesssystem nach Anspruch 5, wobei die Multiplexereinheit (160) mindestens eine der nachfolgenden zentralen Funktionseinheiten (167) enthält:
- Energieversorgungs-Funktionseinheit
- Abtastimpuls-Funktionseinheit
- Taktempfangs-Funktionseinheit

7. Positionsmesssystem nach Anspruch 6, wobei die Multiplexereinheit (160) als zentrale Funktionseinheit eine Dekodiereinheit (169) enthält, die die Kodierung der an die Folgeelektronik (500) zu übertragenden Informationen mit einem fehlerredundanten Datencode erlaubt.

8. Positionsmesssystem nach Anspruch 1, wobei die Multiplexereinheit (160) eine Multiplex-Stufe (163) enthält, die die parallel zugeführten Positions-Rohsignale der Abtasteinheiten (110-130) zur Übertragung der Positions-Rohsignale der verschiedenen Abtasteinheiten (110-130; 210-230; 310-340; 410-440) im zeitlichen Multiplexbetrieb an eine nachgeordnete Folgeelektronik (500) aufbereitet.

## Claims

1. Position measurement system for measuring the position of an object (150; 250; 350; 450), movable in several degrees of freedom, relative to a stationary object (190), comprising:
- at least one material measure (115) which is connected to one of the objects (190),
- a plurality of scanning units (110-130; 210-230; 310-340; 410-440) which are connected to the other object (150; 250; 350; 450) and which produce raw position signals from the optical scanning of the material measure (115), and
- a multiplexer unit (160; 260; 360; 460), the raw position signals produced by the scanning units (110-130; 210-230; 310-340; 410-440) being fed to the multiplexer unit (160; 260; 360; 460), and the latter transmitting the raw position signals of the various scanning units (110-130; 210-230; 310-340; 410-440) to a downstream sequential electronic device (500) in time multiplex operation, without previously converting the raw position signals into position values, and
- the multiplex unit (160) comprising digitization means (161.1, 161.2, 161.3) in order to convert the fed raw position signals into electrically transmittable raw digital signals which can be transmitted to the sequential electronic device in time multiplex operation, and
- the raw position signals fed by the scanning units (110-130) to the multiplexer unit (160) being optical signals, and the latter being transmitted to the multiplexer unit (160) via optical waveguides (111; 121; 131), and conversion means (162.1, 162.2, 162.3) being arranged in the multiplexer unit (160) in order to convert the optical signals into electrical signals which can then be fed to the digitization means (161.1, 161.2, 161.3).

2. Position measurement system according to Claim 1, in which the multiplexer unit (160; 260; 360; 460) comprises a single line driver unit (165) which can be used to transmit the raw position signals of all the scanning units (110-130; 210-230; 310-340; 410-440) to the sequential electronic device (500).

3. Position measurement system according to Claim 1, in which the multiplexer unit (160) comprises correction means (166.1, 166.2) in order to supplement the raw position signals to be transmitted to the sequential electronic device with further secondary information.

4. Position measurement system according to Claim 3, in which the correction means (166.1, 166.2) are suitable for producing and conditioning at least one type of the following secondary information for the transmission to the sequential electronic device:
- error information
- correction information
- diagnostic information
- status information.

5. Position measurement system according to Claim 1, in which the multiplexer unit (160) includes one or more further central functional units (167, 169) which can be used in common by several scanning units (110-130).

6. Position measurement system according to Claim 5, in which the multiplexer unit (160) includes at least one of the following central functional units (167):
- power supply functional unit
- scanning pulse functional unit
- clock-receiving functional unit.

7. Position measurement system according to Claim 6, in which the multiplexer unit (160) includes as central functional unit a decoder unit (169) which permits the use of an error-redundant data code for the purpose of coding the information to be transmitted to the sequential electronic device (500).

8. Position measurement system according to Claim 1, in which the multiplexer unit (160) includes a multiplex stage (163) which conditions the raw position signals, fed in parallel, of the scanning units (110-130) in order to transmit the raw position signals of the various scanning units (110-130; 210-230; 310-340; 410-440) to a downstream sequential electronic device (500) in time multiplex operation.

## Revendications

1. Système de mesure de position pour détecter la position d'un objet (150 ; 250 ; 350 ; 450) mobile dans plusieurs degrés de liberté par rapport à un objet fixe (190), composé de
- au moins un étalon (115) qui est relié avec l'un des objets (190),
- plusieurs unités de palpage (110-130 ; 210-230 ; 310-340 ; 410-440) qui sont reliées avec l'autre objet (150 ; 250 ; 350 ; 450) et qui génèrent des signaux bruts de position à partir du palpage optique de l'étalon (115), et aussi
- une unité de multiplexage (160 ; 260 ; 360 ; 460), un acheminement des signaux bruts de position générés par les unités de palpage (110-130 ; 210-230 ; 310-340 ; 410-440) vers l'unité de multiplexage (160 ; 260 ; 360 ; 460) ayant lieu et celle-ci effectuant une transmission des signaux bruts de position des différentes unités de palpage (110-130 ; 210-230 ; 310-340 ; 410-440) en mode multiplexage dans le temps vers une électronique séquentielle (500) disposée à la suite, sans convertir préalablement les signaux bruts de position en valeurs de position et
- l'unité de multiplexage (160) comprenant des moyens de numérisation (161.1, 161.2, 161.3) pour convertir les signaux bruts de position acheminés en signaux bruts numériques électriquement transmissibles, lesquels peuvent être transmis en mode multiplexage dans le temps à l'électronique séquentielle et
- les signaux bruts de position acheminés par les unités de palpage (110-130) à l'unité de multiplexage (160) étant des signaux optiques et une transmission de ceux-ci à l'unité de multiplexage (160) étant effectuée par le biais de fibres optiques (111 ; 121 ; 131) et des moyens de conversion (162.1, 162.2, 162.3) étant disposés dans l'unité de multiplexage (160) afin de convertir les signaux optiques en signaux électriques qui peuvent ensuite être acheminés aux moyens de numérisation (161.1, 161.2, 161.3).

2. Système de mesure de position selon la revendication 1, dans lequel l'unité de multiplexage (160 ; 260 ; 360 ; 460) comprend une unique unité à circuit d'attaque de puissance (165) qui peut être utilisée pour la transmission des signaux bruts de position de toutes les unités de palpage (110-130 ; 210-230 ; 310-340 ; 410-440) à l'électronique séquentielle (500).

3. Système de mesure de position selon la revendication 1, dans lequel l'unité de multiplexage (160) comprend des moyens de correction (166.1, 166.2) pour compléter les signaux bruts de position à transmettre à l'électronique séquentielle avec des informations secondaires supplémentaires.

4. Système de mesure de position selon la revendication 3, dans lequel les moyens de correction (166.1, 166.2) sont conçus pour générer et conditionner au moins un type des informations secondaires suivantes pour la transmission à l'électronique séquentielle :
- informations de défaut
- informations de correction
- informations de diagnostic
- informations d'état.

5. Système de mesure de position selon la revendication 1, dans lequel l'unité de multiplexage (160) contient une ou plusieurs unités fonctionnelles centrales (167, 169) supplémentaires qui peuvent être utilisées en commun par plusieurs unités de palpage (110-130).

6. Système de mesure de position selon la revendication 5, dans lequel l'unité de multiplexage (160) contient au moins l'une des unités fonctionnelles centrales (167) suivantes :
- unité fonctionnelle d'alimentation en énergie
- unité fonctionnelle d'impulsion de palpage
- unité fonctionnelle de réception d'horloge.

7. Système de mesure de position selon la revendication 6, dans lequel l'unité de multiplexage (160) contient comme unité fonctionnelle centrale une unité de décodage (169) qui permet le codage des informations à transmettre à l'électronique séquentielle (500) avec un code de données à redondance d'erreur.

8. Système de mesure de position selon la revendication 1, dans lequel l'unité de multiplexage (160) contient un étage de multiplexage (163) qui conditionne les signaux bruts de position acheminés en parallèle aux unités de palpage (110-130) en vue de la transmission des signaux bruts de position des différentes unités de palpage (110-130 ; 210-230 ; 310-340 ; 410-440) en mode de multiplexage dans le temps à une électronique séquentielle (500) disposée à la suite.
